# EUROPÄISCHE PATENTSCHRIFT

(11) **EP 0 625 367 B1**
(45) Veröffentlichungstag und Bekanntmachung des Hinweises auf die Patenterteilung: **16.07.1997**
(21) Anmeldenummer: 94106309.1
(22) Anmeldetag: 22.04.1994
(51) Int. Cl.: B01D 46/24, B01D 46/52, B01D 29/54

(54) **Filterpatrone**
Filter cartridge
Cartouche de filtration

(30) Priorität: 19.05.1993 DE 9307614 U
(43) Veröffentlichungstag der Anmeldung: 23.11.1994
(73) Patentinhaber: Rapp, Peter, D-74629 Pfedelbach (DE)
(72) Erfinder: Rapp, Peter, D-74629 Pfedelbach (DE)
(74) Vertreter: Müller, Hans, Dipl.-Ing.

(56) Entgegenhaltungen:
- DE-A- 2 711 449
- DE-U- 8 707 478
- GB-A- 2 089 237
- PATENT ABSTRACTS OF JAPAN vol. 10, no. 269 (C-372) (2325) 12. September 1986 & JP-A-61 093 816 (EIKEN KOGYO K.K.) 12. Mai 1986

## Beschreibung

### TECHNISCHES GEBIET

Die Erfindung betrifft eine Filterpatrone, die zum Einbau in ein Filtergehäuse vorgesehen ist. Die Filterpatronen werden einzeln oder zu mehreren in Filtergehäusen von beispielsweise Entstaubungsanlagen verwendet. Die mit Stäuben versehene Rohluft strömt durch den Filtermantel hindurch, wobei sich die Stäube an der Außenseite des Filtermantels absetzen. Zum Reinigen wird Druckluft in Gegenrichtung durch die Filterpatrone stoßweise hindurchgedrückt, um die an dem Filtermantel sich abgelagerten Staubpartikel von dem Filtermantel wieder zu entfernen. Die Staubpartikel fallen nach dem Lösen von dem Filtermantel nach unten von der Filterpatrone ab.

### STAND DER TECHNIK

Es sind Filterpatronen der eingegangs genannten Art bekannt, die einen hohlzylindrischen Querschnitt beispielsweise in kreisrunder Form besitzen. Ihr Filtermantel besteht aus einem beispielsweise in Kreisform gelegten Faltenbalg. Derartige Filterpatronen besitzen einen geraden Körper. Der Filtermantel ist rechtwinklig zum unteren und oberen Einfassungsring angeordnet, an dem der Faltenbalg befestigt ist. Der untere Einfassungsring ist geschlossen ausgebildet, während der obere Einfassungsring eine zentrische Öffnung besitzt. Beim Anströmen der verschmutzten Rohluft von außen gegen den Filtermantel lagern sich die Schmutzpartikel an der Außenseite des Faltenbalges ab. Nach dem Durchwandern des Filtermantels strömt die dann gereinigte Reinluft zentral oben aus der Filterpatrone heraus. Beim Abreinigen werden die Strömungsverhältnisse umgekehrt. Von oben wird zentrisch in die Filterpatrone Druckluft eingeblasen, wobei der Filtermantel nach aussen stoßweise mehr oder weniger stark ausgebeult wird, was bewirkt, daß sich die Schmutzpartikel von seiner Außenfläche ablösen und nach unten am Filtermantel entlang abfallen können. Da die Strömungsverhältnisse in einem Filtergehäuse nicht wie in der vorstehend beschrieben Art homogen sind und außerdem nicht alle Filterpatronen gleichzeitig abgereinigt werden, werden in aller Regel von dem einen Filtermantel abfallende Schmutzpartikel wieder gegen den Mantel gedrückt. Die Reinigungswirkung ist dadurch vermindert.

Um die Reinigungswirkung zu erhöhen, ist es weiter bekannt, die Mantelfläche einer derartigen Filterpatrone nach unten konisch zulaufend auszubilden. Der Durchmesser des Filtermantels im oberen Bereich ist dann größer als in seinem unteren Bereich. Dies hat den Vorteil, daß beim Abreinigen des Filtermantels weniger Gefahr besteht, daß einmal abgelöste Schmutzpartikel beim Abfallen wieder auf diesen Mantel auftreffen können.

Darüber hinaus ist aus der G 87 07 478 eine hohlzylindrische Filterpatrone bekannt, bei der koaxial zum äußeren Filtermantel ein zusätzlicher innerer Filtermantel vorhanden ist. In dem Zwischenraum zwischen den beiden Filtermänteln strömt die durch die beiden Filtermäntel hindurchgeströmte Luft nach oben als Reinluft aus der Filterpatrone wieder heraus. Diese Luft hat dabei von unten in die Filterpatrone einströmend den äußeren Filtermantel von außen her und den inneren Filtermantel von innen her durchdrungen. Dabei haben sich Staubpartikel an der Innenseite des inneren Filtermantels und an der Außenseite des äußeren Filtermantels abgesetzt. Die Kreisdurchmesser dieser beiden Filtermäntel sind über die Höhe konstant. Bei dieser Filterpatrone ist die insgesamt zur Verfügung stehende Filterfläche durch das zusätzliche Anordnen eines weiteren Filtermantels gegenüber im Stand der Technikbekannten Filterpatronen vergrößert.

Letztlich ist eine gattungsgemäße Filterpatrone aus JP-A-61093816 bekannt.

### DARSTELLUNG DER ERFINDUNG

Ausgehend von diesem vorbekannten Stand der Technik liegt der Erfindung die Aufgabe zugrunde, eine verbesserte Filterpatrone anzugeben.

Diese Erfindung ist durch die Merkmale des Anspruchs 1 gegeben.

Die erfindungsgemäße Filterpatrone besitzt damit aufgrund der mehreren Filtermäntel eine entsprechend vergrößerte Filterfläche. Dabei können die Außenabmessungen der Filterpatrone gegenüber dem im Stand der Technik bekannten Patronen praktisch unverändert bleiben. Darüber hinaus ermöglicht die Filterpatrone aufgrund ihrer konisch zulaufenden beiden Filtermäntel ein optimales Abreinigen dieser beiden Filtermäntel. Die Filterpatrone vereinigt damit die Vorteile der geraden, einen äußeren und inneren Filtermantel aufweisenden Filterpatrone mit derjenigen Filterpatrone, die mit einem einzigen konisch sich nach unten verjüngenden Filtermantel ausgestattet ist. Warum bei diesen Vorteilen die erfindungsgemäße Filterpatrone bis heute nicht bekannt geworden ist, ist im nachhinein betrachtet kaum zu verstehen.

Die Filtermäntel werden als Faltenbälge ausgebildet und werden in Art eines kreiszylindrischen Kegelstumpfes gestaltet. Die kleiner Stirnfläche des äußeren Kegelstumpfes liegt dann im Bereich der größeren Stirnfläche des inneren Kegelstumpfes.

Als vorteilhaft hat es sich ferner herausgestellt, auf der Reingasseite der Filtermäntel jeweils eine Stützvorrichtung für den betreffenden Filtermantel vorzusehen. Mit dieser Stützvorrichtung soll ein bleibendes Ausbeulen des mit Rohluft beaufschlagten Filtermantels verhindert werden. Die Stützvorrichtung kann wie im Stand der Technik an sich bekannt aus einem biegesteifen Gitter bestehen. Allerdings ist es auch möglich, in dem im Querschnitt V-förmigen Innenraum der beiden Filtermäntel einen Stützkorb vorzusehen, der gleichzeitig die Innenseiten beider Filtermäntel entsprechend abstützen kann.

Weitere Vorteile und Merkmale der Erfindung ergeben sich durch die in den Ansprüchen ferner angegebenen Merkmale sowie aus dem nachfolgenden Ausführungsbeispiel.

### KURZE BESCHREIBUNG DER ZEICHNUNG

Die Erfindung wird im folgenden an Hand des in der Zeichnung dargestellten Ausführungsbeispiels näher beschrieben und erläutert: Es zeigen
- Fig. 1: einen Längsschnitt durch eine Filterpatrone nach der Erfindung,
- Fig. 2: einen Grundriß der Filterpatrone nach Fig. 1 im Bereich ihres unteren Stützringes und
- Fig. 3: eine Darstellung entsprechend Fig. 2 im Bereich ihrer oberen beiden Stützringe.

### WEGE ZUR AUSFÜHRUNG DER ERFINDUNG

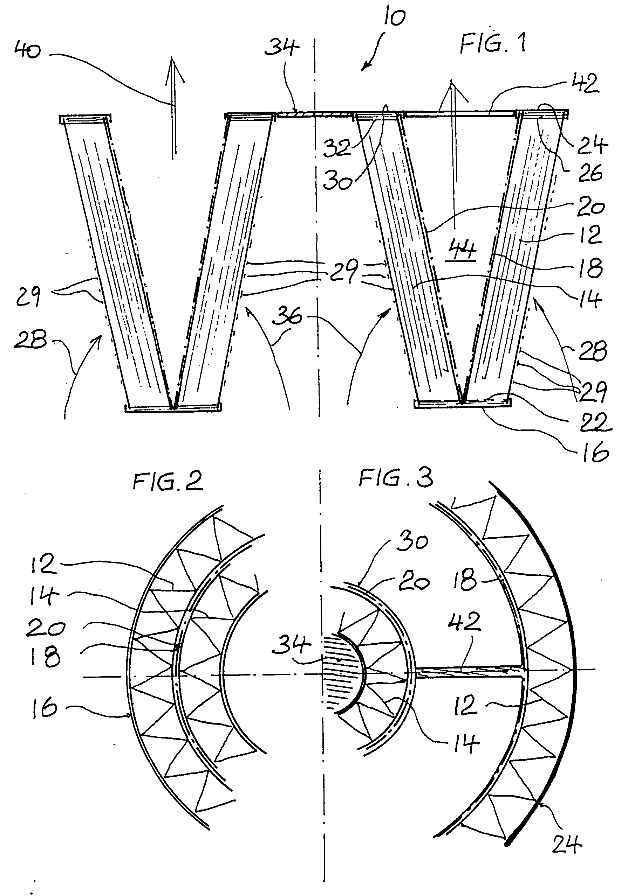

Eine Filterpatrone 10, die in Fig. 1 lediglich schematisch in ihren Grundzügen dargestellt ist, besitzt einen äußeren Faltenbalg 12 und einen inneren Faltenbalg 14. Beide Faltenbälge 12, 14 sind konisch ausgebildet. Der äußere Faltenbalg 12 hat im unteren Bereich der Patrone 10 seine kleinere Querschnittsform, während der innere Faltenbalg 14 diese kleinere Querschnittsform an seinem oberen Ende besitzt. Entsprechend dem Stand der Technik ist ein unterer Einfassungsring 16 vorhanden, in dem der äußere Faltenbalg 12 gehalten ist. Zusätzlich ist in diesem Ring 16 auch das untere Ende des inneren Faltenbalgs 14 befestigt. Zwischen den beiden Faltenbälgen sind im Bereich des unteren Einfassungsringes 16 noch die unteren Enden von zwei Stützkörben 18, 20 vorhanden. Durch diese beiden Stützkörbe 18, 20 werden die beiden Faltenbälge 12, 14 im Bereich des Einfassungsringes 16 voneinander separiert. Die unteren Enden der beiden Faltenbälge 12, 14 und der Stützkörbe 18, 20 sind in dem Ring 16 in einem Kunststoffbett 22 eingeschweißt gehalten.

Im oberen Bereich der Filterpatrone 10 ist der äußere Faltenbalg 12 in einem äußeren Einfassungsring 24 gehalten. Dabei ist der Faltenbalg 12 wie in seinem unteren Ende auch in dem Ring 24 in einem Kunststoffbett 26 eingeschweißt vorhanden. Zusätzlich ist in diesem Ring 24 noch das obere Ende des Stützkorbes 18 eingelagert. Der Stützkorb 18 besitzt der konischen Form des Faltenbalges 12 folgend die Gestalt eines Kegelstumpfes mit in etwa kreisförmigen Grundflächen. Beim Anströmen des äußeren Faltenbalges 12 mit Rohluft 28 verhindert der Stützkorb 18 eine bleibende Verformung des Faltenbalges 12 nach innen. Beim Anströmen der Rohluft 28 werden sich die in der Rohluft vorhandenen Staubpartikel 29 außen an dem Faltenbalg 12 ablagern.

Das obere Ende des inneren Faltenbalges 14 ist in vergleichbarer Weise wie das obere Ende des äußeren Faltenbalges 12 in einem inneren Einfassungsring 30 befestigt. Dazu ist das obere Ende dieses Faltenbalges 14 ebenfalls in einem Kunststoffbett 32 unverrückbar gehalten. Zusätzlich ist in diesem Einfassungsring 30 das obere Ende des inneren Stützkorbes 20 gehalten. Auch dieser Stützkorb 20 besitzt die Form eines Kegelstumpfes. Im Unterschied zum Stützkorb 18 ist aber der Bereich seines kleineren Querschnittes oben und nicht unten. Der Stützkorb 20 paßt sich damit ebenfalls der Gestalt des inneren Faltenbalges 14 an.

Der zentrische Bereich 34 des Einfassungsringes 30 ist verschlossen ausgebildet. Die zentrisch in das Innere der Patrone einströmende Rohluft 36 strömt durch den Faltenbalg 14 hindurch und vereinigt sich mit der durch den äußeren Faltenbalg 12 hindurchströmenden Luft 28. Diese Luft verläßt dann als Reinluft 40 die Patrone 10 im Bereich zwischen den beiden Einfassungsringen 24, 30.

Die beiden Einfassungsringe 24, 30 sind aneinander befestigt. Im vorliegenden Beispielsfall geschieht dies durch mehrere, beispielsweise drei umfangsmäßig verteilt angeordnete Stege 42.

Statt der beiden Filterkörbe 18, 20 könnte auch ein Stützkorb vorgesehen werden, der den Zwischenraum 44 zwischen den beiden Faltenbälgen 12, 14 so abstützend ausfüllt, daß ebenfalls die beiden Faltenbälge 12, 14 im wesentlichen ausbeulungsvermindert bzw. ausbeulungsfrei gehalten sind.

Eine Anordnung von zusätzlichen Faltenbälgen im Inneren der Patrone 10 erscheint grundsätzlich möglich, dürfte aufgrund der dann erforderlichen großen Patronenquerschnitte auf Einzelfälle beschränkt sein.

Grundsätzlich könnte bei der Filterpatrone ihre Anströmrichtung auch umgekehrt werden.

## Patentansprüche

1. Filterpatrone (10) mit einem äußeren und innneren Filtermantel (12,14), wobei die Filtermäntel als Faltenbälge ausgebildet sind,
- die beiden Filtermäntel jeweils in Art eines kreiszylindrischen Kegelstumpfes ausgebildet sind,
- die kleinere Stirnfläche des äußeren Kegelstumpfes (12) im Bereich der größeren Stirnfläche des inneren Kegelstumpfes (14) vorhanden ist, so daß die beiden Filtermäntel im Längsschnitt V-förmig zueinander ausgerichtet sind, und das obere Ende des äußeren Faltenbalges (12) in einem oberen, äußeren Einfassungsring (24) und das obere Ende des inneren Faltenbalges (14) in einem oberen, inneren Einfassungsring (30) jeweils gehalten ist
**dadurch gekennzeichnet**, daß
- die beiden Filtermäntel als zwei einzelne Faltenbälge (12, 14) vorhanden sind,
- die beiden Faltenbälge mit ihren unteren Enden gemeinsam in einem unteren Einfassungsring (16) gehalten sind.

2. Filterpatrone nach Anspruch 1,
**dadurch gekennzeichnet**, daß
- auf der Reingasseite der Filterbälge (12, 14) jeweils eine Stützvorrichtung (18,20) für den betreffenden Filterbalg (12,14) vorhanden ist.

3. Filterpatrone nach Anspruch 2,
**dadurch gekennzeichnet**, daß
- die Stützvorrichtung (18,20) als Stützkorb in Art eines Kegelstumpfes mit in etwa kreisförmigen Grundflächen oder mit Grundflächen in Art von Vielecken ausgebildet ist.

4. Filterpatrone nach Anspruch 3,
**dadurch gekennzeichnet**, daß
- in dem im Querschnitt V-förmigen Innenraum (44) zwischen den beiden Filterbälgen (12,14) ein diesem Innenraum umfangsmäßig angepaßter Stützkorb vorhanden ist.

## Claims

1. Filter cartridge (10) with an outer and inner filter casing (12, 14), the filter casings being designed as concertinas, the two filter casings being designed in each case in the manner of a circular-cylindrical cone frustum, the smaller end face of the outer cone frustum (12) being present in the region of the larger end face of the inner cone frustum (14), so that the two filter casings are oriented in a V-shaped manner relative to one another in a longitudinal section, and, in each case, the upper end of the outer concertina (12) being held in an upper outer mounting ring (24) and the upper end of the inner concertina (14) being held in an upper inner mounting ring (30), characterized in that the two filter casings are present as two individual concertinas (12, 14), and the two concertinas are jointly held with their lower ends in a lower mounting ring (16).

2. Filter cartridge according to Claim 1, characterized in that a supporting device (18, 20) for each of the respective filter concertinas (12, 14) is present on the clean-gas side of the filter concertinas (12, 14).

3. Filter cartridge according to Claim 2, characterized in that the supporting device (18, 20) is designed as a supporting basket in the manner of a cone frustum with approximately circular base areas or with base areas in the manner of polygons.

4. Filter cartridge according to Claim 3, characterized in that, in the interior (44) having a V-shaped cross-section, a supporting basket matched circumferentially to this interior is present between the two filter concertinas (12, 14).

## Revendications

1. Cartouche de filtration (10) avec une enveloppe de filtration extérieure (12) et une enveloppe de filtration intérieure (14), les enveloppes de filtration étant réalisées sous forme de soufflets,
- les deux enveloppes de filtration étant chacune réalisées en forme de cône tronqué cylindrique circulaire,
- la face frontale plus petite du cône tronqué extérieur (12) étant présente dans la région de la face frontale plus grande du cône tronqué intérieur (14), de sorte que les deux enveloppes de filtration sont conjointement disposées en forme de V en coupe longitudinale, et
- l'extrémité supérieure du soufflet extérieur (12) étant maintenue dans une bague de sertissage supérieure extérieure (24) et l'extrémité supérieure du soufflet intérieur (14) étant maintenue dans une bague de sertissage supérieure intérieure (30),
**caractérisée** en ce que
- les deux enveloppes de filtration sont présentes sous la forme de deux soufflets indépendants (12, 14),
- les deux soufflets sont, par leurs extrémités inférieures, maintenus conjointement dans une bague de sertissage inférieure (16).

2. Cartouche de filtration selon la revendication 1, **caractérisée** en ce qu'un dispositif de soutien respectif (18, 20) pour le soufflet de filtration concerné (12, 14) est présent sur le côté de gaz purifié des soufflets de filtration (12, 14).

3. Cartouche de filtration selon la revendication 2, **caractérisée** en ce que le dispositif de soutien (18, 20) est réalisé sous la forme d'un panier de soutien en forme de cône tronqué avec des faces de base approximativement circulaires ou avec des faces de base polygonales.

4. Cartouche de filtration selon la revendication 3, **caractérisée** en ce qu'un panier de soutien est présent dans l'espace intérieur (44) à section en forme de V entre les deux soufflets de filtration (12, 14), panier dont la périphérie est adaptée à cet espace intérieur.
